# EUROPÄISCHE PATENTSCHRIFT

(11) **EP 1 552 175 B1**
(45) Veröffentlichungstag und Bekanntmachung des Hinweises auf die Patenterteilung: **15.03.2006**
(21) Anmeldenummer: 03808682.3
(22) Anmeldetag: 23.07.2003
(51) Int. Cl.: F16D 3/223

(54) **GEGENBAHNGELENK**
RZEPPA JOINT
JOINT DE CARDAN DE TYPE RZEPPA

(30) Priorität: 17.10.2002 DE 10248372
(43) Veröffentlichungstag der Anmeldung: 13.07.2005
(73) Patentinhaber: Shaft-Form-Engineering GmbH, 63165 Mühlheim am Main (DE)
(72) Erfinder: JACOB, Werner, 60599 Frankfurt am Main (DE); JACOB, Martin, D., 38114 Braunschweig (DE)
(74) Vertreter: KEIL & SCHAAFHAUSEN Patentanwälte
(86) Internationale Anmeldenummer: PCT/EP2003/008020
(87) Internationale Veröffentlichungsnummer: WO 2004/036076

(56) Entgegenhaltungen:
- DE-A- 3 739 927
- DE-A- 19 837 471
- DE-C- 3 710 518
- DE-C- 4 031 819
- GB-A- 2 347 730

## Beschreibung

Die Erfindung betrifft ein Gegenbahngelenk, das als Gleichlaufgelenk bspw. als Lenkungsgelenk oder zum Anschluss an die Längswelle eines Kraftfahrzeugs eingesetzt wird.

Ein derartiges Gegenbahngelenk, das bspw. aus der DE 1999 05 451 C2 bekannt ist, weist eine Innennabe und eine Außennabe auf, zwischen denen ein im Wesentlichen ringförmiger Käfig geführt ist. Sowohl in der Innennabe als auch in der Außennabe sind jeweils paarweise einander zugeordnet Laufrillen eingebracht, in denen in dem Käfig aufgenommene Kugeln verschiebbar gehalten sind. Der Bahngrund der einander zugeordneten Laufrillenpaare der Innennabe und der Außennabe nähern sich dabei abwechselnd von einem ersten Ende des Gegenbahngelenks ausgehend in Richtung auf das zweite Ende und von dem zweiten Ende ausgehend in Richtung auf das erste Ende einander an.

Bei diesem bekannten Gegenbahngleichlaufgelenk werden die Kugeln einzeln manuell in den Käfig und die Laufrillenpaare eingesetzt. Dies ist mit erheblichem Zeitaufwand verbunden, der negative Auswirkungen auf die Wirtschaftlichkeit der Herstellung des Gelenks hat.

Dokument DE 4 031 819 zeigt ein derartiges Gegenbahngelenk mit einer zweiteiligen Außennabe. Dokument DE 19837471 zeigt ein Gegenbahngelenk mit einer zweiteiligen Innennabe.

Daher ist es Aufgabe der vorliegenden Erfindung, ein Gegenbahngelenk der eingangs beschriebenen Art bereit zu stellen, das schneller und einfacher und damit auch wirtschaftlicher montierbar ist.

Erfindungsgemäß wird diese Aufgabe dadurch gelöst, dass die Innennabe wenigstens zwei miteinander verbundene Elemente umfasst, die auf der Innennabenachse im Wesentlichen hintereinander liegen. Ein erstes dieser Elemente weist dabei die ersten Innenlaufrillen der Innennabe auf, während ein zweites Element die zweiten Innenlaufrillen der Innennabe trägt. Der Käfig lässt sich auf diese Weise bei der Montage des Gegenbahngelenks direkt in die Außennabe einsetzen, wobei bereits jede zweite Kugel in dem Käfig aufgenommen sein kann. Die übrigen Kugeln lassen sich dann von Innen in den Käfig und die Laufrillen der Außennabe einsetzen. Die beiden Elemente, die gemeinsam die Innennabe bilden,' werden dann von den beiden entgegengesetzten Enden des Gegenbahngelenks her in den mit Kugeln bestückten Käfig eingeführt und miteinander verbunden. Es ist somit also möglich, bereits die Hälfte der Kugeln mit dem Käfig zusammen in die Außennabe einzusetzen. Auch für das Einführen der übrigen Kugeln in den Käfig ist es nicht wie bisher erforderlich, den Käfig für jede Kugel in eine geeignete Einsetzposition innerhalb der Außennabe zu bewegen. Die Montage des Gegenbahngelenks wird auf diese Weise deutlich erleichtert.

Vorzugsweise sind die beiden Elemente, die gemeinsam die Innennabe bilden, jeweils mit Vorsprüngen und Ausnehmungen, die klauenartig ineinander greifen, ausgebildet, so dass die beiden Elemente in tangentialer Richtung formschlüssig aneinander anliegen. Das mittels der Kugeln zwischen der Außennabe und der Innennabe zu übertragende Drehmoment wird durch die formschlüssig aneinander anliegenden Elemente vollständig in die Innennabe geleitet bzw. aus dieser abgeleitet.

Um auch in axialer Richtung eine gute Verbindung der beiden die Innennabe bildenden Elemente sicher zu stellen, können diese miteinander verschraubt werden. Hierzu ist bspw. eines der die Innennabe bildenden Elemente mit einer zentralen Durchgangsbohrung versehen, während das andere Element eine mit dieser Durchgangsbohrung koaxiale Gewindebohrung aufweist.

Die Herstellung der beiden Elemente, welche die Innennabe bilden, ist mit besonders großer Präzision möglich, wenn die beiden Elemente im Wesentlichen spanlos bearbeitete Massivumformteile sind. Die Laufrillen und die aneinander anliegenden Vorsprünge und Ausnehmungen der beiden Elemente lassen sich bspw. durch einen Prägevorgang mit hoher Genauigkeit und gleichbleibender Qualität einbringen. Es ist jedoch möglich, einzelne Bearbeitungsschritte, wie bspw. das Vorsehen der Durchgangsbohrung sowie der Gewindebohrung zur Verbindung der beiden Elemente miteinander, in einem spanabhebenden Fertigungsschritt auszuführen.

Vorzugsweise ist eines der beiden Elemente, die zu der Innennabe zusammengefügt werden, das Ende einer Welle bzw. eines Wellenzapfens. Auf diese Weise wird der Anschluss des erfindungsgemäßen Gegenbahngelenks an eine Welle oder dgl. erleichtert.

Alternativ hierzu kann eines der Elemente einstückig mit einer Hülse ausgebildet sein, die eine Innenprofilierung zur Verbindung mit einem Wellenende oder Wellenzapfen aufweist.

Um das Einsetzen des Käfigs in die Außennabe zu erleichtern, wird es bevorzugt, dass die Anzahl der Laufrillen in der Außennabe und der Innennabe jeweils ein ganzzahliges Vielfaches von vier ist. Bei dieser Ausgestaltung des Gegenbahngelenks liegen somit stets Laufrillen einander gegenüber, deren Bahngrund sich in Richtung auf das gleiche Ende des Gegenbahngelenks der zentralen Gelenkachse annähert.

Im Folgenden wird die Erfindung anhand von Ausführungsbeispielen und unter Bezugnahme auf die Zeichnung näher erläutert.

Es zeigen:
- Fig. 1: eine Schnittansicht des Gegenbahngelenks nach einer ersten Ausführungsform,
- Fig. 2: einen Schnitt durch die Innennabe des Gegenbahngelenks nach Fig. 1 entlang der Linie II-II,
- Fig. 3: einen Schnitt durch ein Element der Innennabe nach Fig. 2 entlang der Linie III-III,
- Fig. 4: einen Schnitt durch ein Element der Innennabe nach Fig. 2 entlang der Linie IV-IV,
- Fig. 5: einen Schnitt durch ein Gegenbahngelenk nach einer zweiten Ausführungsform,
- Fig. 6: einen Schnitt durch das Gegenbahngelenk nach Fig. 5 entlang der Linie VI-VI,
- Fig. 7: einen Schnitt durch ein Element der Innennabe nach Fig. 6 entlang der Linie VII-VII und
- Fig. 8: einen Schnitt durch ein Element der Innennabe nach Fig. 6 entlang der Linie VIII-VIII.

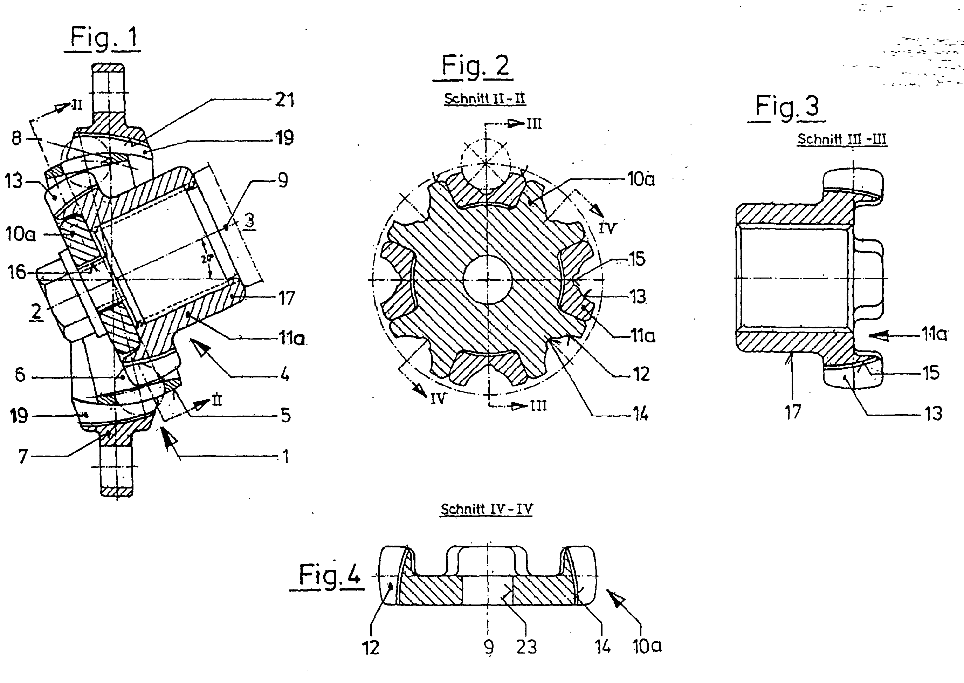

Das in den Fig. 1 bis 4 dargestellte Gegenbahngelenk 1 weist sein erstes, antriebsseitiges Ende 2 und ein zweites abtriebsseitiges Ende 3 auf, wobei die Bezeichnung "antriebsseitig" und "abtriebsseitig" hier rein beispielhaft zur besseren Unterscheidbarkeit der beiden Enden verwendet wird. Selbstverständlich sind die beiden Enden 2 und 3 in gleicher Weise zur Anbindung mit einem treibenden oder einen anzutreibenden Bauteil geeignet.

Von innen nach außen weist das Gegenbahngelenk 1 eine Innennabe 4, einen Käfig 5, der mit Kugeln 6 bestückt ist, und einer Außennabe 7 auf. Die Kugeln 6 sind dabei in Fenstern 8 des Käfigs 5 aufgenommen.

Die Innennabe 4 ist in der gezeigten Ausführungsform zweiteilig ausgebildet. Auf der zentralen Innennabenachse 9 sind ein erstes Element 10a und eine zweites Element 11a im Wesentlichen hintereinander angeordnet. Die beiden Elemente 10a und 11a, die gemeinsam die Innennabe 4 bilden, sind wechselseitig mit Vorsprüngen und Ausnehmungen versehen, die, wie in der Schnittansicht von Fig. 2 dargestellt, klauenartig ineinander greifen. Dabei liegen die Vorsprünge der beiden Elemente 10a und 11a in tangentialer Richtung formschlüssig aneinander an. In den Vorsprüngen des ersten Elements 10a ist jeweils eine erste Innenlaufrille 12 ausgebildet, während in den Vorsprüngen des zweiten Elements 11a zweite Innenlaufrillen 13 vorgesehen sind.

Die ersten Innenlaufrillen 12 verlaufen dabei hinterschnittfrei ausgehend von dem antriebsseitigen Ende 2 in Richtung auf das abtriebsseitige Ende 3. Ihr Bahngrund 14 nähert sich dabei der Innennabenachse 9 an. Demgegenüber verlaufen die zweiten Innenlaufrillen 13 des Elements 11a hinterschnittfrei von dem antriebsseitigen Ende 2 ausgehend in Richtung auf das abtriebsseitige Ende 3, wobei sich ihr Bahngrund 15 dabei von der Innennabenachse 9 entfernt.

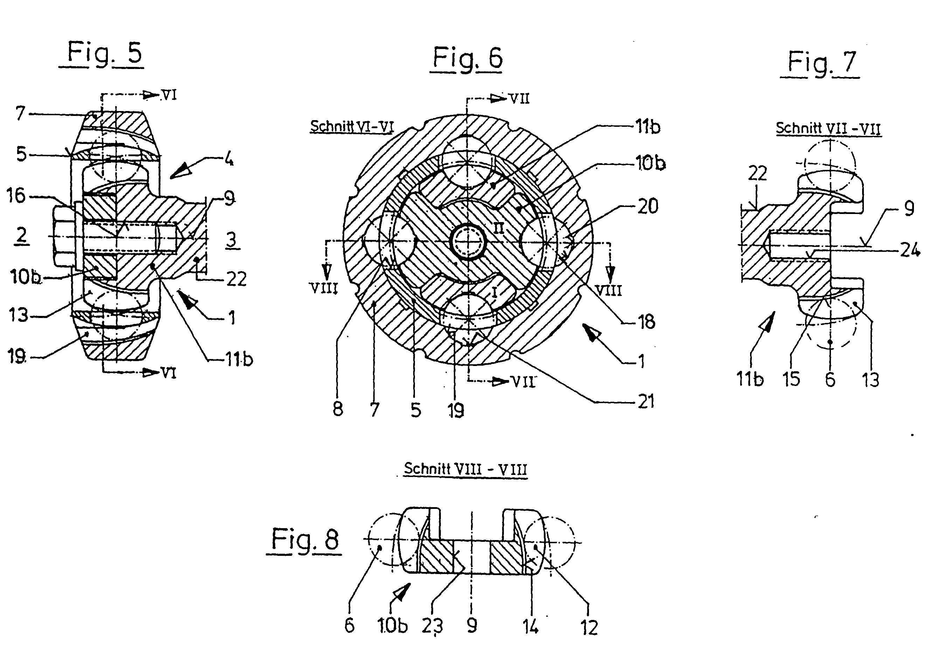

Die beiden Elemente 10a und 11a, die die Innennabe 4 bilden, sind in axialer Richtung durch eine Verschraubung mittels eines Gewindebolzens 16 miteinander verbunden. Zusätzlich zu der Verbindung der beiden Elemente 10a und 11a in tangentialer Richtung durch die aneinander anliegenden Vorsprünge im Bereich der Innenlaufrillen 12 bzw. 13 können, wie in den Fig. 3 und 4 angedeutet, weitere ineinander eingreifende Vorsprünge und Ausnehmungen zur drehfesten Verbindung der beiden Elemente vorgesehen sein. In dieser ersten Ausführungsform ist das Element 11a mit einer hierzu koaxialen, hülsenartigen Verlängerung 17 versehen, die von dem ersten Element 10a wegragt und zur drehfesten Verbindung mit einem Wellenende oder dgl. bspw. mit einer Innenprofilierung versehen sein kann.

Die Außennabe 7 ist ein einstückiges, ringförmiges Bauteil, dessen Achse in der gestreckten Stellung des Gegenbahngelenks 1 mit der Innennabenachse 9 der Innennabe 4 zusammen fällt. In der Innenfläche der Außennabe 7 sind erste und zweite Außenlaufrillen 18 bzw. 19 ausgebildet, die um die Außennabenachse regelmäßig und abwechselnd verteilt angeordnet sind. Im fertig montierten Zustand des Gegenbahngelenks 1 liegen die ersten Innenlaufrillen 12 der Innennabe 4 ersten Außenlaufrillen 18 der Außennabe 7 gegenüber und zweite Innenlaufrillen 13 liegen den zweiten Außenlaufrillen 19 gegenüber, so dass diese jeweils miteinander ein Laufrillenpaar bilden.

Die ersten Außenlaufrillen 18 der Außennabe 7 verlaufen dabei hinterschnittfrei von dem antriebsseitigen Ende 2 ausgehend in Richtung auf das abtriebsseitige Ende 3 hin, wobei sich ihr Bahngrund 20 dabei von der Außennabenachse entfernt. Die zweiten Außenlaufrillen 19 verlaufen demgegenüber hinterschnittfrei von dem abtriebsseitigen Ende 3 ausgehend in Richtung auf das antriebsseitige Ende 2 hin, wobei sich ihr Bahngrund 21 dabei von der Außennabenachse entfernt.

In der in den Fig. 5 bis 8 gezeigten zweiten Ausführungsform des Gegenbahngelenks 1 ist der grundsätzliche Aufbau mit dem der oben beschriebenen ersten Ausführungsform weitgehend gleich. In dem Gegenbahngelenk 1 nach der zweiten Ausführungsform sind jedoch lediglich vier Kugeln 6 in dem Käfig 5 aufgenommen, während nach der ersten nommen, während nach der ersten Ausführungsform acht Kugeln 6 in den Laufrillenpaaren und dem Käfig 5 eingefügt sind.

Das Gegenbahngelenk nach der ersten Ausführungsform eignet sich folglich bspw. als Längswellengelenk in Kraftfahrzeugen, während das Gegenbahngelenk nach der zweiten Ausführungsform als Lenkungswellengelenk einsetzbar ist.

Zudem ist die Innennabe 4, wie insbesondere aus den Fig. 5 und 7 ersichtlich ist, als das Ende einer Welle 22 ausgebildet. Zur Verbindung der Elemente 10b und 11b, die gemeinsam die Innennabe 4 bilden, ist in dem ersten Element 10b eine Durchgangsbohrung 23 für den Durchtritt des Gewindebolzens 16 vorgesehen, während in dem zweiten Element 11b der Innennabe 4 eine Gewindebohrung 24 eingebracht ist, in die der Gewindebolzen 16 einschraubbar ist.

Im Folgenden wird nun die Montage des Gegenbahngelenks 1 erläutert, die bei den beiden gezeigten Ausführungsformen gleich ist. Zunächst wird der Käfig 5 in die Außennabe 7 eingeführt, indem die Achse des Käfigs 5 im Wesentlichen rechtwinklig zu der Außennabenachse ausgerichtet wird. Wenn die Anzahl der Kugeln 6, die in den Laufrillen der Innennabe 4 und der Außennabe 7 eingesetzt sind, ein ganzzahliges Vielfaches von vier ist, liegt einer ersten Außenlaufrille 18 der Außennabe 7 stets auch eine erste Außenlaufrille 18 gegenüber. Zwei einander gegenüberliegende Außenlaufrillen 18 bzw. 19 weisen also mit ihrer größeren Öffnung, d.h. dem Ende der Laufrillen, dessen Bahngrund am weitesten von der Außennabe entfernt ist, in die gleiche Richtung. Der Käfig 5 lässt sich auf diese Weise in ein Außenlaufrillenpaar einsetzen und in der Außennabe 7 kann derart verschwenken, dass die Achse des Käfigs mit der der Außennabe im Wesentlichen deckungsgleich übereinander liegt.

In dieser Position können sämtliche Kugeln 6 von innen her in die Fenster 8 des Käfigs 5 und die Laufrillen 18 bzw. 19 der Außennabe 7 eingesetzt werden. Es ist jedoch auch möglich, den Käfig 5 bereits mit einem Teil der Kugeln 6 in die Außennaben 7 einzuführen.

Wenn alle Kugeln 6 in dem Käfig 5 bzw. die Außennabe 7 eingebracht sind, wird die Innennabe 4 in das Gegenbahngelenk 1 montiert, indem das erste Element 10a bzw. 10b von dem antriebsseitigen Ende 2 her in den Käfig 5 geführt wird, während das zweite Element 11a bzw. 11b von dem abtriebsseitigen Ende 3 des Gegenbahngelenks 1 her in das erste Element 10a bzw. 10b gesteckt wird. Die Vorsprünge der beiden Elemente 10a, 10b bzw. 11a, 11b greifen dabei klauenartig ineinander. Zur axialen Fixierung der beiden Elemente wird der Gewindebolzen 16 durch die Durchgangsbohrung 23 des ersten Elements 10a bzw. 10b geführt und in der Gewindebohrung 24 des zweiten Elements 11a bzw. 11b verschraubt.

Das Einsetzen der beiden Elemente 10a, 10b bzw. 11a, 11b in das Gegenbahngelenk 1 wird dadurch ermöglicht, dass die Innenlaufrillen 12 bzw. 13 mit ihrer größten Öffnung, d.h. dem Ende, an dem der Bahngrund am weitesten der Innennabenachse 9 angenähert ist, in unterschiedliche Richtungen weisen. Die Kugeln 6 werden so sicher in die Innenlaufrillen 12 bzw. 13 eingeführt.

### Bezugszeichenliste

- 1: Gegenbahngelenk
- 2: antriebsseitiges Ende
- 3: abtriebsseitiges Ende
- 4: Innennabe
- 5: Käfig
- 6: Kugel
- 7: Außennabe
- 8: Käfigfenster
- 9: Innennabenachse
- 10a, 10b: erstes Element der Innennabe 4
- 11a, 11b: zweites Element der Innennabe 4
- 12: erste Innenlaufrille
- 13: zweite Innenlaufrille
- 14: Bahngrund der ersten Innenlaufrille 12
- 15: Bahngrund der zweiten Innenlaufrille 13
- 16: Gewindebolzen
- 17: Hülse
- 18: erste Außenlaufrille
- 19: zweite Außenlaufrille
- 20: Bahngrund der ersten Außenlaufrille 18
- 21: Bahngrund der zweiten Außenlaufrille 19
- 22: Wellenende
- 23: Durchgangsbohrung
- 24: Gewindebohrung

## Patentansprüche

1. Gegenbahngelenk, das ein antriebsseitiges Ende (2) und ein abtriebsseitiges Ende (3) aufweist, mit
- einer Innennabe (4), die eine Innennabenachse (9) und eine Außenfläche aufweist, in der erste Innenlaufrillen (12) und zweite Innenlaufrillen (13) um die Innennabenachse (9) abwechselnd verteilt angeordnet sind, wobei die ersten Innenlaufrillen (12) von dem antriebsseitigen Ende (2) ausgehend in Richtung auf das abtriebsseitige Ende (3) verlaufen und sich ihr Bahngrund (14) dabei der Innennabenachse (9) annähert und wobei die zweiten Innenlaufrillen (13) von dem abtriebsseitigen Ende (3) ausgehend in Richtung auf das antriebsseitige Ende (2) verlaufen und sich ihr Bahngrund (15) dabei der lnnennabenachse (9) annähert,
- einer Außennabe (7), die eine Außennabenachse und eine Innenfläche aufweist, in der erste Außenlaufrillen (18) und zweite Außenlaufrillen (19) um die Außennabenachse abwechselnd verteilt angeordnet sind und jeweils die ersten Innenlaufrillen (12) ersten Außenlaufrillen (18) und die zweiten Innenlaufrillen (13) zweiten Außenlaufrillen (19) gegenüberliegen und mit diesen jeweils ein Paar bilden, wobei die ersten Außenlaufrillen (18) von dem antriebsseitigen Ende (2) ausgehend in Richtung auf das abtriebsseitige Ende (3) verlaufen und sich ihr Bahngrund (20) dabei von der Außennabenachse entfernt und wobei die zweiten Außenlaufrillen (19) von dem abtriebsseitigen Ende (3) ausgehend in Richtung auf das antriebsseitige Ende (2) verlaufen und sich ihr Bahngrund (21) dabei von der Außennabenachse (16) entfernt,
- einem ringförmigen Käfig (5), der zwischen der Innennabe (4) und der Außennabe (7) angeordnet ist und entsprechend der Anzahl der Laufrillenpaare (12, 18; 13, 19) radiale Fenster (8) aufweist, in denen in die Laufrillen (12, 13, 18, 19) eingreifende Kugeln (6) geführt sind,
**dadurch gekennzeichnet, dass** die Innennabe (4) wenigstens zwei miteinander verbundene Elemente (10a, 10b, 11a, 11b) umfasst, die auf der Innennabenachse (9) im Wesentlichen hintereinander liegen und von denen ein erstes Element (10a, 10b) die ersten Innenlaufrillen (12) und ein zweites Element (11a, 11b) die zweiten Innenlaufrillen (13) aufweist.

2. Gegenbahngelenk nach Anspruch 1, **dadurch gekennzeichnet, dass** die beiden Elemente (10a, 10b, 11a, 11b) jeweils Vorsprünge und Ausnehmungen aufweisen, die derart klauenartig ineinander greifen, dass sie in tangentialer Richtung formschlüssig aneinander anliegen.

3. Gegenbahngelenk nach Anspruch 1 oder 2, **dadurch gekennzeichnet, dass** die beiden Elemente (10a, 10b, 11a, 11b) mittels einer Verschraubung (16, 24) lösbar miteinander verbunden sind.

4. Gegenbahngelenk nach einem der Ansprüche 1 bis 3, **dadurch gekennzeichnet, dass** die beiden Elemente (10a, 10b, 11a, 11b) der Innennabe (4) im Wesentlichen spanlos bearbeitet Massivumformteile sind.

5. Gegenbahngelenk nach einem der Ansprüche 1 bis 4, **dadurch gekennzeichnet, dass** eines der Elemente (10a, 10b, 11a, 11b) das Ende einer Welle (22) oder eines Wellenzapfens bildet.

6. Gegenbahngelenk nach einem der Ansprüche 1 bis 4, **dadurch gekennzeichnet, dass** eines der Elemente (10a, 10b, 11a, 11b) einstückig mit einer Hülse (17) ausgebildet ist, die eine Innenprofilierung aufweist.

7. Gegenbahngelenk nach einem der Ansprüche 1 bis 6, **dadurch gekennzeichnet, dass** die Anzahl der Laufrillen (12, 13, 18, 19) in der Außennabe (7) und der Innennabe (4) ein ganzzahliges Vielfaches von vier ist.

## Claims

1. A Rzeppa joint, which comprises a driving end (2) and a driven end (3), having
- an inner race (4) comprising an inner race axis (9) and an outer face in which first inner grooves (12) and second inner grooves (13) are distributed alternately around the inner race (9), where the first inner grooves (12) run starting from the driving end (2) towards the driven end (3) and their bases (14) thereby extend towards the inner race axis (9) and where the second inner grooves (13) run starting from the driven end (3) towards the driving end (2) and their bases (15) thereby extend towards the inner race axis (9),
- an outer race (7) comprising an outer race axis and an inner face in which first outer grooves (18) and second outer grooves (19) are distributed alternately around the outer race axis and in each case the first inner grooves (12) are situated opposite first outer grooves (18) and the second inner grooves (13) are situated opposite second outer grooves (19) and in each case form a pair therewith, where the first outer grooves (18) run from the driving end (2) towards the driven end (3) and their bases (20) thereby extend away from the outer race axis and where the second outer grooves (19) run from the driven end (3) towards the driving end (2) and their bases (21) thereby extend away from the outer race axis (16),
- an annular cage (5), which is disposed between the inner race (4) and the outer race (7) and comprises radial windows (8) corresponding to the number of pairs of grooves (12, 18; 13, 19), in which balls (6) engaging in the grooves (12, 13, 18, 19) are guided,
**characterised in that** the inner race (4) comprises at least two interconnected elements (10a, 10b, 11a, 11b), which lie substantially one behind the another on the inner race axis (9) and a first element (10a, 10b) of which comprises the first inner grooves (12) and a second element (11a, 11b) of which comprises the second inner grooves (13).

2. A Rzeppa joint according to Claim 1,
**characterised in that** the two elements (10a, 10b, 11a, 11b) each comprise projections and recesses which engage in each other in the manner of claws so that they positively abut one another in the tangential direction.

3. A Rzeppa joint according to Claim 1 or 2,
**characterised in that** the two elements (10a, 10b, 11a, 11b) are releasably connected to each other by means of a screw connection (16, 24).

4. A Rzeppa joint according to one of Claims 1 to 3,
**characterised in that** the two elements (10a, 10b, 11a, 11b) of the inner race (4) are substantially solid parts formed without cutting.

5. A Rzeppa joint according to one of Claims 1 to 4,
**characterised in that** one of the elements (10a, 10b, 11a, 11b) forms the end of a shaft (22) or of a shaft journal.

6. A Rzeppa joint according to one of Claims 1 to 4,
**characterised in that** one of the elements (10a, 10b, 11a, 11b) is constructed in one piece with a sleeve (17) which comprises inner profiling.

7. A Rzeppa joint according to one of Claims 1 to 6,
**characterised in that** the number of grooves (12, 13, 18, 19) in the outer race (7) and the inner race (4) is a whole-numbered multiple of four.

## Revendications

1. Joint de type Rzeppa, qui présente une extrémité (2) située du côté de l'entraînement et une extrémité (3) située côté sortie, avec
- un moyeu intérieur (4) présentant un axe de moyeu intérieur (9) et une surface extérieure dans laquelle sont disposées en alternance autour de l'axe de moyeu intérieur (9) des premières gorges de roulement intérieures (12) et des secondes gorges de roulement intérieures (13), les premières gorges de roulement intérieures (12) s'étendant en partant de l'extrémité (2) située du côté de l'entraînement en direction de l'extrémité (3) située côté sortie tandis que le fond de leur voie (14) se rapproche de l'axe de moyeu intérieur (9), et les secondes gorges de roulement intérieures (13) s'étendant en partant de l'extrémité (3) située côté sortie en direction de l'extrémité (2) située du côté de l'entraînement tandis que le fond de leur voie (15) se rapproche de l'axe de moyeu intérieur (9),
- un moyeu extérieur (7) présentant un axe de moyeu intérieur et une surface intérieure dans laquelle sont disposées en alternance autour de l'axe de moyeu extérieur des premières gorges de roulement extérieures (18) et des secondes gorges de roulement extérieures (19), les premières gorges de roulement intérieures (12) étant situées en face des premières gorges de roulement extérieures (18) et les secondes gorges de roulement intérieures (13) en face des secondes gorges de roulement extérieures (19) en formant chaque fois une paire avec celles-ci, les premières gorges de roulement extérieures (18) s'étendant en partant de l'extrémité (2) située du côté de l'entraînement en direction de l'extrémité (3) située côté sortie tandis que le fond de leur voie (20) s'éloigne de l'axe de moyeu extérieur, et les secondes gorges de roulement extérieures (19) s'étendant en partant de l'extrémité (3) située côté sortie en direction de l'extrémité (2) située du côté de l'entraînement tandis que le fond de leur voie (21) s'éloigne de l'axe de moyeu extérieur (16),
- une cage annulaire (5) disposée entre le moyeu intérieur (4) et le moyeu extérieur (7) et muni d'autant de fenêtres radiales (8) qu'il y a de paires de gorges de roulement (12, 18 ; 13, 19) dans lesquelles sont guidées des billes (6) s'engageant dans les gorges de roulement (12, 13, 18, 19),
**caractérisé en ce que** le moyeu intérieur (4) comprend au moins deux éléments (10a, 10b, 11a, 11b) reliés ensemble et situés sur l'axe de moyeu intérieur (9) essentiellement l'un derrière l'autre et parmi lesquels un premier élément (10a, 10b) est muni des premières gorges de roulement intérieures (12) et un deuxième élément (11a, 11b) des secondes gorges de roulement intérieures (13).

2. Joint de type Rzeppa selon la revendication 1, **caractérisé en ce que** les deux éléments (10a, 10b, 11a, 11b) présentent chacun des saillies et des évidements qui s'emboîtent les uns dans les autres comme des griffes de telles sorte qu'en direction tangentielle ils soient en prise par emboîtement de forme.

3. Joint de type Rzeppa selon la revendication 1 ou 2, **caractérisé en ce que** les deux éléments (10a, 10b, 11a, 11b) sont fixés l'un à l'autre de façon réversible au moyen d'une fixation par vis (16, 24).

4. Joint de type Rzeppa selon l'une des revendications 1 à 3, **caractérisé en ce que** les deux éléments (10a, 10b, 11a, 11b) du moyeu intérieur (4) sont des pièces massives estampées travaillées essentiellement sans copeaux.

5. Joint de type Rzeppa selon l'une des revendications 1 à 4, **caractérisé en ce qu'**un des éléments (10a, 10b, 11a, 11b) forme l'extrémité d'un arbre (22) ou d'un tourillon d'arbre.

6. Joint de type Rzeppa selon l'une des revendications 1 à 4, **caractérisé en ce qu'**un des éléments (10a, 10b, 11a, 11b) est formé en un seul tenant avec un manchon (17) présentant un profilé intérieur.

7. Joint de type Rzeppa selon l'une des revendications 1 à 6, **caractérisé en ce que** le nombre de gorges de roulement (12, 13, 18, 19) dans le moyeu extérieur (7) et le moyeu intérieur (4) est un multiple entier de quatre.
